# EUROPÄISCHE PATENTSCHRIFT

(11) **EP 3 452 732 B1**
(45) Veröffentlichungstag und Bekanntmachung des Hinweises auf die Patenterteilung: **11.09.2019**
(21) Anmeldenummer: 18727777.7
(22) Anmeldetag: 25.05.2018
(51) Int. Cl.: F16B 5/12, F16B 2/24, F16B 5/06, F16B 21/08

(54) **CLIP ZUM BEFESTIGEN EINES ERSTEN ELEMENTS AN EINEM ZWEITEN ELEMENT UND VORRICHTUNG MIT EINEM DERARTIGEN CLIP**
CLIP FOR FASTENING A FIRST ELEMENT TO A SECOND ELEMENT AND DEVICE WITH A CLIP OF THIS KIND
CLIP SERVANT À FIXER UN PREMIER ÉLÉMENT SUR UN DEUXIÈME ÉLÉMENT ET DISPOSITIF COMPRENANT UN CLIP DE CE TYPE

(30) Priorität: 29.05.2017 DE 102017005352
(43) Veröffentlichungstag der Anmeldung: 13.03.2019
(73) Patentinhaber: A. Raymond et Cie, 38000 Grenoble (FR)
(72) Erfinder: BINKERT, Sven, 79540 Lörrach (DE)
(74) Vertreter: Tilmann, Max Wilhelm
(86) Internationale Anmeldenummer: PCT/EP2018/063773
(87) Internationale Veröffentlichungsnummer: WO 2018/219799

(56) Entgegenhaltungen:
- EP-A1- 1 787 031
- WO-A1-2012/104250

## Beschreibung

Die Erfindung betrifft einen Clip zum Befestigen eines ersten Elements an einem zweiten Element. Ferner betrifft die Erfindung eine Vorrichtung mit einem ersten Element und einem an dem ersten Element befestigten zweiten Element, wobei das erste Element eine Ausnehmung aufweist und das zweite Element mittels eines Clips an dem ersten Element befestigt ist.

Aus EP 2 536 958 B1 ist ein Clip zum Befestigen eines ersten Elements an einem zweiten Element bekannt. Der Clip weist einen Kopf und eine Spitze auf. Der dort beschriebene Clip weist eine erste Clipseite (dort mit Außenschenkelabschnitt 8 beschrieben) und eine der ersten Clipseite gegenüberliegende zweite Clipseite auf. Die erste und die zweite Seite erstrecken sich jeweils von einem Biegeabschnitt am Kopf bis hin zur Spitze, die von den Scheiteln der beiden bogenförmigen Umbiegeabschnitte gebildet werden. An die Umbiegeabschnitte schließen sich Zwischenabschnitte an, an deren Enden jeweils zwei Clipflächen (Anlageabschnitte 15) pro Zwischenabschnitt zur Anlage an das erste Element vorgesehen sind. Zwei Clipflächen stehen an der ersten Clipseite über; zwei Clipflächen stehen an der zweiten Clipseite über.

Der aus WO 2012/104250 A2 bekannte Clip weist einen vergleichbaren Grundaufbau auf. Ferner sind dort in Form von Randflügeln Seitenwände vorgesehen, die sich von der einen Clipseite in Richtung auf die andere Clipseite erstrecken. Außerdem ist in WO 2012/104250 A2 ein Stützarm offenbart, der über einen Biegeabschnitt in die erste Clipseite übergeht und der sich in einer Draufsicht entlang der Längsachse des Clips senkrecht zur ersten Clipseite erstreckt.

EP1787031 A1 offenbart ein Befestigungselement, das zum Befestigen eines Teiles außen an einer Trägerwand hierzu in eine Öffnung der Trägerwand einsetzbar ist, wobei das Befestigungselement derart ausgestattet ist, dass es bei einem Einsetzen in die Öffnung diese durchgreift und bei Erreichen einer vorgegebenen Endlage an der Trägerwand verriegelt und ein Herausziehen des Befestigungselements aus der Öffnung unterbindet und wobei das Befestigungselement im verriegelten Zustand an beiden Seiten der Trägerwand anliegt und zwar mit einem Anschlagselement außen an der Trägerwand - und damit an der dem zu befestigenden Teil zugewandten Seite der Trägerwand - und mit einem Schnappelement an der anderen, dem zu befestigenden Teil abgewandten Seite der Trägerwand, wobei mit dem Schnappelement ein Entriegelungselement in Verbindung steht, das von außen zugänglich ist und ein Entriegeln des Schnappelements und ein Herausziehen des Befestigungselements aus der Öffnung ermöglicht.

Vor diesem Hintergrund lag der vorliegenden Erfindung die Aufgabe zugrunde, einen Clip zum Befestigen eines ersten Elements an einem zweiten Element vorzuschlagen, der insbesondere von kompakterer Gestalt ist und/oder gegen Torsionsbelastung und Biegebelastung des zwischen dem Kopfs und der Spitze befindlichen Schafts widerstandsfähiger ist.

Diese Aufgabe wird durch den Clip gemäß Anspruch 1 und die Vorrichtung gemäß Anspruch 12 gelöst. Vorteilhafte Ausführungsformen sind in den Unteransprüchen und der hiernach folgenden Beschreibung wiedergegeben.

Die Erfindung geht von dem Grundgedanken aus, die Clipfläche nicht von einer Seitenwand überstehen zu lassen, die über einen einzigen Biegeabschnitt in die Kopffläche übergeht, sondern die Clipfläche von einer Clipseite überstehen zu lassen, die über einen (zweiten) Biegeabschnitt in die Seitenwand übergeht, die dann wiederum über einen (ersten) Biegeabschnitt in die Kopffläche übergeht, wobei die beiden Biegeabschnitte um Biegeachsen gebogen sind, die nicht parallel zueinander verlaufen. Gerade bei Clips mit länglichen Kopfflächen, bei denen der den Übergang zur Seitenwand bildende Biegeabschnitt an der Schmalseite der (länglichen) Kopffläche vorgesehen ist, erlaubt es die Erfindung, die Clipfläche unter den Teil des Kopfes zu ziehen, der über den den Kopf mit der Spitze verbindenden Schaft des Clips übersteht.

Anders ausgedrückt schlägt es die Erfindung vor, die Fläche, die sich dem ersten Biegeabschnitt anschließt, zur ersten Seitenwand des Clips und die sich im Stand der Technik an die dort vorgesehen Clipseite anschließende Seitenwand zur Clipseite auszubilden. Anders gesprochen wird die Lage, bzw. Reihenfolge von Clipseite und Seitenwand gegenüber dem Stand der Technik vertauscht.

Diese Anordnung bietet zudem den Vorteil, dass insbesondere bei dünner Ausführung des ersten Bauteils, beispielsweise wenn es sich um das Gewebe eines an einem Rahmen (zweites Bauteil) eines Fahrzeugs zu befestigenden Airbags handelt, insbesondere dann, wenn der dünne Rand des Gewebes eingeklemmt werden soll oder in dem dünnen Rand des Gewebes ein Loch vorgesehen ist, durch das der Schaft des Clip geführt wird, durch die nun vorgeschlagene Orientierung des Kopfs relativ zu den Clipflächen besser verhindert zu können, dass das Gewebe über den Kopf gezogen wird.

Unter einem "Clip" zum Befestigen eines ersten Elements an einem zweiten Element wird eine Befestigungsvorrichtung verstanden, die zumindest eine erste Kontaktfläche (vorzugsweise die weiter unten beschriebene Gegenfläche) und zumindest eine zweite, der ersten Kontaktfläche zugewandte Kontaktfläche aufweist. Die erste Kontaktfläche ist in der Regel an einem feststehenden Element der Befestigungsvorrichtung vorgesehen, während die zweite Kontaktfläche (beim vorliegenden Clip die Clipfläche) auf einem federnden Element der Befestigungsvorrichtung vorgesehen ist. Derartige Befestigungsvorrichtungen sind dazu vorgesehen, mit einer Spitze in eine Ausnehmung, meist ein Loch, in dem ersten Element eingeführt zu werden. Dabei wird das die zweite Kontaktfläche tragende federnde Element während des Einschiebens eingedrückt, federt jedoch nach dem Passieren des Lochs wieder in seine Ausgangsstellung zurück. Das erste Element ist meist als flächiges Element, beispielsweise als Platte oder als Blech eines Teils eines Rahmens eines Fahrzeugs ausgebildet. Das erste Element kann jedoch auch ein Sackloch mit einer entsprechend gewählten Hinterschneidung aufweisen, die dem federnden Element das Ausfedern ermöglicht, nachdem es einen engeren Teil des Lochs oberhalb der Hinterschneidung passiert hat. Das zweite Element kann durch Klemmung an dem ersten Element befestigt werden, beispielsweise wenn es zwischen einem Kopf des Clips und einer Oberfläche des ersten Elements geschoben wird und der Abstand der ersten Kontaktfläche, die dann am Kopf des Clips vorgesehen ist, und der zweiten Kontaktfläche des Clips so gewählt ist, dass sie bei einer bestimmten Materialstärke des ersten Elements und einer bestimmten Materialstärke des zweiten Elements eine solche Klemmung erzeugen kann. Ebenso ist es denkbar, dass das zweite Element ebenfalls ein Loch aufweist und der Clip mit seiner Spitze durch beide Löcher geführt wird. Ebenso ist es denkbar, dass das zweite Element an einem Kopf des Clips befestigt wird, wenn dieser beispielsweise einen Haken oder einen Befestigungspilz aufweist oder wenn das zweite Element schlichtweg mit dem Kopf des Clips verklebt, verschweißt oder in anderer Weise fügend verbunden wird.

Unter einem Kopf eines solchen Clips wird eine an einem Ende des Clips vorgesehene Verbreiterung verstanden. Der Kopf ist in der Regel dafür vorgesehen, um zu verhindern, dass der Clip gänzlich durch ein Loch des ersten Elements geschoben werden kann. Häufig ist der Kopf auch dafür ausgebildet, um die für das Einschieben des Clips in ein Loch des ersten Elements aufzubringende Kraft auf den Clip applizieren zu können. Hierzu weist der Clip häufig eine der Spitze abgewandte flache Oberfläche auf (die Kopffläche). In einer bevorzugten Ausführungsform ist der Kopf starr ausgebildet, wobei unter "starr" verstanden wird, dass kein Abschnitt des Kopfes relativ zu einem anderen Abschnitt des Kopfs beweglich, beispielsweise federnd ausgebildet ist. An dem (starren) Kopf können jedoch federnde Elemente, beispielsweise federnde Arme oder schirmartige Dichtlippen vorgesehen sein. In einer bevorzugten Ausführungsform ist die größte Querschnittsfläche aller Querschnittsflächen des Kopfs in Ebenen senkrecht zur Längsachse des Clips größer als die größte Querschnittsfläche aller Querschnittsflächen des Schafts in Ebenen senkrecht zur Längsachse des Clips.

Der Clip weist ferner eine Spitze auf. Mit "Spitze" wird im Kontext dieser Beschreibung lediglich dass dem Kopf gegenüberliegende Ende des Clips bezeichnet. Zwar ist es in einer bevorzugten Ausführungsform vorgesehen, dass sich ein sich von dem Kopf in Richtung auf die Spitze erstreckender Schaft des Clips zur Spitze hin verjüngt. Dies ist aber nicht zwingend notwendig. Als Spitze im Kontext dieser Beschreibung wird auch ein in einer denkbaren Ausführungsform vorzusehendes stumpfes Ende an dem dem Kopf gegenüberliegenden Ende eines Schafts verstanden. In einer bevorzugten Ausführungsform wird die Spitze jedoch aus mehreren Teilabschnitten des Clips gebildet, beispielsweise durch die vier Scheitel der bogenförmigen Umbiegeabschnitte, wie sie in der WO 2012/104250 A2 gezeigt werden oder die beiden Scheitel der Bogenabschnitte der in der EP 2 536 958 B1 dargestellten Ausführungsformen.

Zwischen dem Kopf und der Spitze weist der Clip einen, ggf. aus mehreren Teilen zusammengesetzten Schaft auf. Der Clip weist eine Längsachse auf, die sich vom Kopf zur Spitze erstreckt. Insbesondere bevorzugt ist der Schaft hinsichtlich seiner vom Kopf zur Spitze weisenden Längserstreckung länger, als die maximal Breite des Schafts senkrecht zur Längsachse. Insbesondere bevorzugt weist die Längsachse des Clips in Richtung der Längserstreckung des Schafts. In einer bevorzugten Ausführungsform ist der Schaft und insbesondere bevorzugt der Clip bezüglich einer Ebene, die die Längsachse des Clips enthält, spiegelsymmetrisch ausgeführt. In einer alternativen Ausführungsform ist der Schaft, insbesondere bevorzugt der Clip in der Weise rotationssymmetrisch ausgeführt, dass es zumindest eine Ebene gibt, die die Längsachse des Clips enthält, bei der jeder Abschnitt des Schafts, bzw. in der besonders bevorzugten Ausführungsform des Clips, der sich auf einer Seite dieser Ebene befindet, durch eine Drehung um 180° um die Längsachse in Deckung mit einem identisch ausgebildeten Abschnitt des Schafts, bzw. des Clips auf der anderen Seite dieser Ebene gebracht werden kann. Die vorgenannten Symmetrievorschriften beziehen sich beim Schaft insbesondere bevorzugt auf die Ausgestaltung der Clipseite, der Clipfläche, der Seitenwände und der Gegenwände (soweit vorhanden) und schließen nicht aus, dass am Schaft weitere, nicht der Symmetrievorschrift folgend ausgeführte Elemente, wie beispielsweise Finger oder Rastvorsprünge vorgesehen sind.

Der Clip weist eine erste Clipseite auf, die sich von einem dem Kopf benachbarten Bereich in Richtung auf die Spitze erstreckt. Ferner weist der Clip eine zweite Clipseite auf, die sich von einem dem Kopf benachbarten Bereich in Richtung auf die Spitze erstreckt. Die erste Clipseite und die zweite Clipseite bilden Elemente des Schafts des Clips. In einer bevorzugten Ausführungsform ist die erste Clipseite bezüglich einer Ebene, die die Längsachse enthält, auf einer Seite der Ebene angeordnet und die zweite Clipseite auf der gegenüberliegenden Seite dieser Ebene. In einer bevorzugten Ausführungsform verläuft die erste Clipseite parallel zur zweiten Clipseite.

Die erste Clipseite erstreckt sich von einem dem Kopf benachbarten Bereich entlang der Längsachse in Richtung auf die Spitze des Clips. Dabei weist die erste Clipseite insbesondere bevorzugt keinen gebogenen Übergangsabschnitt, beispielsweise einen Biegeabschnitt auf, mit dem sie unmittelbar in ein Bauelement übergeht, das einen Teil des Kopfes des Clips bildet. Bei dem erfindungsgemäßen Clip ist zwischen die erste Clipseite und der Kopffläche die erste Seitenwand zwischengeschaltet.

In einer bevorzugten Ausführungsform weist die erste Clipseite eine Ausnehmung auf. Das Element, an dem die an der ersten Clipseite überstehende Clipfläche ausgebildet ist, durchgreift insbesondere bevorzugt diese Ausnehmungen. In einer bevorzugten Ausführungsform ist es somit Aufgabe der Clipseite eine Umfassung für eine Ausnehmung zu bilden, durch das das die Clipfläche tragende Element hindurchgreifen kann. Diese Aufgabe kann die erste Clipseite auch erfüllen, wenn sie in einigem Abstand zum Kopf beginnt, also der dem Kopf nächste Rand der Clipseite einige Millimeter, beispielweise mehr als 2, beispielsweise mehr als 5 Millimeter von einem dem Kopf zugehörigen Element beabstandet ist. Andererseits kann es eine Aufgabe der ersten Clipseite sein, zur Stabilität des Schafts des Clips beizutragen. Dieses Ziel wird besonders gut erreicht, wenn der dem Kopf nächste Rand der ersten Clipseite möglichst nah an den Kopf herangeführt wird und beispielsweise nur wenige Millimeter oder sogar nur einen Millimeter vom Kopf beabstandet angeordnet ist.

In einer bevorzugten Ausführungsform hat die erste Clipseite eine rechteckige Grundstruktur, in die dann die Ausnehmung für das Durchgreifen des die Clipfläche tragenden Elements eingearbeitet ist. Ferner kann auf der Clipfläche eine oder mehrere Auswölbungen vorgesehen sein, die den Schaft zusätzlich stabilisieren.

In einer bevorzugten Ausführungsform ist die zweite Clipfläche wie die erste Clipfläche ausgeführt. In einer bevorzugten Ausführungsform ist die zweite Clipfläche derart rotationssymmetrisch zur ersten Clipfläche ausgeführt, dass es zumindest eine Ebene gibt, die die Längsachse des Clips enthält, bei der jeder Abschnitt der ersten Clipfläche des Clips, der sich auf einer Seite dieser Ebene befindet, durch eine Drehung um 180° um die Längsachse in Deckung mit einem Abschnitt der zweiten Clipfläche des Clips auf der anderen Seite dieser Ebene bringen lässt.

An der ersten Clipseite des Clips steht eine Clipfläche über. In einer bevorzugten Ausführungsform ist die Clipfläche von der Spitze abgewandt und insbesondere bevorzugt dem Kopf zugewandt. Es sind Ausführungsformen denkbar, bei denen die Clipfläche in einer ersten Position in einer Ebene liegt, die senkrecht zur Längsachse des Clips steht. Es sind aber auch Ausführungsformen denkbar, bei denen die Clipfläche in einer ersten Position in einer Ebene angeordnet ist, die in einem Winkel zur Längsachse des Clips steht. Insbesondere bevorzugt ist der Winkel > 45, insbesondere bevorzugt > 50°, insbesondere bevorzugt > 60 °, insbesondere bevorzugt > 70 ° zur Längsachse des Clips. In einer bevorzugten Ausführungsform ist die erste Position die Position, in der sich die Clipfläche befindet, wenn keine Kraft von außen auf den Clip ausgeübt wird.

Der erfindungsgemäße Clip ist so ausgeführt, dass die Clipfläche aus einer ersten Position unter Spannen einer Feder entlang einer Bewegungsrichtung in eine gegenüber der ersten Position näher zur Längsachse gelegenen Position bewegt werden kann. Das die Clipfläche tragende Element kann somit in Richtung auf die Längsachse eingedrückt werden. Dabei ist vorgesehen, dass die Bewegungsrichtung, entlang der die Clipfläche von der ersten Position näher zur Längsachse bewegt werden kann, zumindest eine Komponente hat, die senkrecht zur Längsachse steht. Es sind Ausführungsformen denkbar, bei denen die Clipfläche entlang einer Bewegungsrichtung, die senkrecht zur Längsachse steht, von der ersten Position unter Spannung einer Feder in eine näher zur Längsachse gelegene Position bewegt werden kann. Es sind aber auch Ausführungsformen denkbar, bei denen die Bewegungsrichtung bogenförmig ist, beispielsweise bei Ausführungsformen, bei denen die Clipfläche am Ende eines Zwischenabschnitts ausgebildet ist, der sich von einem zur Spitze zugehörigen Umbiegeabschnitt fort erstreckt und sich beim Eindrücken der Clipfläche eine Rotationsbewegung der Clipfläche um den Scheitelpunkt des Umbiegeabschnitt einstellt. Aber auch bei einer bogenförmigen Bewegungsrichtung ist stets eine Komponente entlang des Bewegungsbogens vorgesehen, die senkrecht zur Längsachse steht.

Der Kopf des erfindungsgemäßen Clips weist einen Kopfabschnitt auf, an dem eine von der Spitze fort weisende Kopffläche ausgebildet ist. In einer bevorzugten Ausführungsform ist die Kopffläche eben ausgeführt. Die Kopffläche kann Löcher oder randseitige Ausnehmungen aufweisen. Diese werden in der Kopffläche häufig vorgesehen, wenn Werkzeuge, beispielsweise Zangen von außen durch die Kopffläche hindurch in das Innere des Clips geführt werden sollen, beispielsweise um beim Ausbauen des Clips die Clipflächen aus der ersten Position unter Spannen einer Feder in die näher zur Längsachse gelegene Position zu bewegen. In einer bevorzugten Ausführungsform durchgreift die Längsachse den Kopf mittig. Es sind aber auch - je nach geplanter Einbausituation des Clips - Ausführungsformen denkbar, bei dem die Längsachse den Kopfe außermittig durchgreift.

In einer bevorzugten Ausführungsform ist die Kopffläche die größte, vorzugsweise die einzige von der Spitze fort weisende Fläche des Kopfs. In einer bevorzugten Ausführungsform ist die Kopffläche in einer Ebene angeordnet, die in einem Winkel von > 45 °, insbesondere bevorzugt > 50 °, insbesondere bevorzugt > 60 °, insbesondere bevorzugt > 80 °, insbesondere bevorzugt > 85 ° zur Längsachse steht. In einer bevorzugten Ausführungsform ist die Kopffläche in einer Ebene angeordnet, die senkrecht zur Längsachse steht. In einer bevorzugten Ausführungsform bildet die Kopffläche hinsichtlich einer Erstreckung des Clips von der Spitze fort das letzte Element des Clips.

Bei dem erfindungsgemäßen Clip geht die Kopffläche über einen ersten Biegeabschnitt, der um eine erste Biegeachse gebogen ist, in eine erste Seitenwand über, wobei die erste Biegeachse in einem Winkel von > 0° bis < 180° zur Längsachse und/oder in einem Winkel von 0 ° bis < 90 ° zu der Komponente der Bewegungsrichtung der Clipfläche steht, die senkrecht zur Längsachse steht.

Im Rahmen dieser Beschreibung schließt der Hinweis darauf, dass eine erste Achse, beispielsweise eine Biegeachse in einem Winkel zu einer zweiten Achse, beispielsweise der Längsachse oder einer anderen Biegeachse steht sowohl die Bauformen ein, bei denen die erste Achse die zweite Achse schneidet und der beschriebene Winkel somit am Schnittpunkt der beiden Achsen abgelesen werden kann. Der besagte Hinweis schließt aber auch insbesondere solche Bauformen ein, bei denen die erste Achse in einer ersten Ebene liegt und die zweite Achse in einer zweiten, zur ersten Ebene parallelen Ebene liegt und der zwischen den Achsen gebildete Winkel durch parallele Verschiebung der einen Ebene auf die andere Ebene an dem sich dann ergebenden Schnittpunkt der einen Achse mit der zweiten, parallel verschobenen Achse ermittelt wird.

In einer bevorzugten Ausführungsform steht die erste Biegeachse in einem Winkel von > 30° bis < 150° und insbesondere bevorzugt von > 45° bis < 135° und insbesondere bevorzugt von > 60° bis < 120° und insbesondere bevorzugt von > 80° bis < 100° und insbesondere in einem Winkel von 90° zur Längsachse des Clips. In einer bevorzugten Ausführungsform steht die erste Biegeachse in einem Winkel von < 90°, insbesondere bevorzugt von < 45 °, insbesondere bevorzugt von < 30 °, insbesondere bevorzugt von < 20°, insbesondere bevorzugt von < 10° und insbesondere bevorzugt in einem Winkel von 0° zu der Komponente der Bewegungsrichtung der Clipfläche, die senkrecht zur Längsachse steht.

In einer bevorzugten Ausführungsform ist der zwischen der Kopffläche und der ersten Seitenwand eingeschlossene Winkel > 30° bis < 150° und insbesondere bevorzugt von > 45° bis < 135° und insbesondere bevorzugt von > 60° bis < 120° und insbesondere bevorzugt von > 80° bis < 100° und insbesondere 90°.

Bei dem erfindungsgemäßen Clip ist vorgesehen, dass die erste Seitenwand über einen zweiten Biegeabschnitt, der um eine zweite Biegeachse gebogen ist, in die erste Clipseite übergeht, wobei die zweite Biegeachse in einem Winkel von > 0° bis < 180° zu der Komponente der Bewegungsrichtung der Clipfläche steht, die senkrecht zur Längsachse steht, und/oder in einem Winkel von 0° bis < 90° zur Längsachse steht.

In einer bevorzugten Ausführungsform steht die zweite Biegeachse in einem Winkel von > 30° bis < 150° und insbesondere bevorzugt von > 45° bis < 135° und insbesondere bevorzugt von > 60° bis < 120° und insbesondere bevorzugt von > 80° bis < 100° und insbesondere in einem Winkel von 90° zu der Komponente der Bewegungsrichtung der Clipfläche, die senkrecht zur Längsachse steht. In einer bevorzugten Ausführungsform steht die zweite Biegeachse in einem Winkel von < 90°, insbesondere bevorzugt von < 45°, insbesondere bevorzugt von < 30°, insbesondere bevorzugt von < 20°, insbesondere bevorzugt von < 10° und insbesondere bevorzugt in einem Winkel von 0° zur Längsachse.

In einer bevorzugten Ausführungsform ist der zwischen der ersten Seitenwand und der ersten Clipseite eingeschlossene Winkel > 30° bis < 150° und insbesondere bevorzugt von > 45° bis < 135° und insbesondere bevorzugt von > 60° bis < 120 ° und insbesondere bevorzugt von > 80° bis < 100° und insbesondere 90°.

In einer bevorzugten Ausführungsform weist der Kopf zumindest eine der Spitze zugewandte Gegenfläche auf, die der Clipfläche gegenüberliegt. In einer bevorzugten Ausführungsform ist die erste Clipseite flach ausgebildet und weißt eine Außenoberfläche auf, die in einer Ebene liegt, wobei in dieser bevorzugten Ausführungsform der Teile der Clipfläche, der in der ersten Position über die erste Clipseite übersteht, und die der Clipfläche zugewandte Gegenfläche des Kopfs auf der gleichen Seite dieser Ebene liegen. In einer besonders bevorzugten Ausführungsform gibt es in der ersten Position eine Flächennormale der Clipfläche, die die der Spitze zugewandte Gegenfläche des Kopfs schneidet. In einer bevorzugten Ausführungsform überlappt die Clipfläche in der ersten Position bei einer Blickrichtung entlang der Längsachse des Clips die Gegenfläche zumindest teilweise.

In einer bevorzugten Ausführungsform weist der Kopf des Clips eine Gegenfläche auf, die der Clipsfläche zugewandt ist. In einer bevorzugten Ausführungsform verläuft die Clipsfläche parallel zur Gegenfläche, wenn das federnde Element sich in seiner Ausgangslage befindet, also nach außen gefedert ist. In einer bevorzugten Ausführungsform ist der zwischen der Clipsfläche und der Gegenfläche eingeschlossene Winkel < 45°, insbesondere bevorzugt <30°, insbesondere bevorzugt <20°, insbesondere bevorzugt <10° wenn das federnde Element sich in seiner Ausgangslage befindet, also nach außen gefedert ist. In einer bevorzugten Ausführungsform ist die Gegenfläche an einem feststehenden Bereich des Kopfes ausgebildet. In einer alternativen Ausführungsform weist der Kopf federnde Arme auf, die in eine Richtung parallel zur Längsrichtung des Clips federn können, wobei die Gegenfläche an einem Abschnitt des Arms vorgesehen ist, vorzugsweise an einem Endabschnitt des Arms vorgesehen ist.

In einer bevorzugten Ausführungsform geht die erste Clipseite über einen dritten Biegeabschnitt, der um eine dritte Biegeachse gebogen ist, in eine der ersten Seitenwand gegenüberliegende Gegenwand über. In einer bevorzugten Ausführungsform verläuft die dritte Biegeachse parallel zur zweiten Biegeachse. In einer bevorzugten Ausführungsform haben die erste Seitenwand, die sich an die erste Seitenwand anschließende erste Clipseite und die sich an die erste Clipseite anschließende, der ersten Seitenwand gegenüberliegende Gegenwand in einem Querschnitt senkrecht zur Längsachse zusammen einen U-förmigen Querschnitt, bei dem die erste Clipseite den Grund des U's bildet.

In einer bevorzugten Ausführungsform steht die dritte Biegeachse in einem Winkel von > 30° bis < 150° und insbesondere bevorzugt von > 45° bis < 135° und insbesondere bevorzugt von > 60° bis < 120° und insbesondere bevorzugt von > 80° bis < 100° und insbesondere in einem Winkel von 90° zu der Komponente der Bewegungsrichtung der Clipfläche, die senkrecht zur Längsachse steht. In einer bevorzugten Ausführungsform steht die dritte Biegeachse in einem Winkel von < 90°, insbesondere bevorzugt von < 45°, insbesondere bevorzugt von < 30°, insbesondere bevorzugt von < 20°, insbesondere bevorzugt von < 10° und insbesondere bevorzugt in einem Winkel von 0° zur Längsachse.

In einer bevorzugten Ausführungsform ist der zwischen der ersten Seitenwand und der der ersten Seitenwand gegenüberliegenden Gegenwand eingeschlossene Winkel < 45°, insbesondere bevorzugt < 40°, insbesondere bevorzugt < 30°, insbesondere bevorzugt < 20°, insbesondere bevorzugt < 10°. In einer besonders bevorzugten Ausführungsform verläuft die der ersten Seitenwand gegenüberliegende Gegenwand parallel zur ersten Seitenwand.

In einer bevorzugten Ausführungsform weist der Kopf in eine Richtung senkrecht zur Längsachse eine maximale Längserstreckung und in eine Richtung senkrecht zur Längsachse, die zugleich senkrecht zur Richtung der Längserstreckung ist, eine maximale Quererstreckung aufweist, so dass in einer Draufsicht auf den Kopf entlang der Längsachse alle Teile des Kopfs innerhalb einer rechteckigen Kopfbegrenzungsfläche liegen, die senkrecht zur Längsachse steht, deren längere Seite sich in Richtung der maximalen Längserstreckung erstreckt und deren Länge hat und deren kürzere Seite sich in Richtung der maximalen Quererstreckung erstreckt und deren Länge aufweist. In einer besonders bevorzugten Ausführungsform dieser Ausführungsform liegt die Projektion der Clipfläche in Richtung der Längsachse auf die Ebene der Kopfbegrenzungsfläche in der Kopfbegrenzungsfläche. Weist der Kopf vom Kopf abstehende federnde Arme auf, so können diese auch aus der Kopfbegrenzungsfläche herausragen und werden in einer bevorzugten Ausführungsform nicht zur Bestimmung der Kopfbegrenzungsfläche mit berücksichtigt.

In einer bevorzugten Ausführungsform entspricht die maximale Längserstreckung der maximalen Quererstreckung. Die Kopfbegrenzungsfläche kann somit quadratisch sein. In einer bevorzugten Ausführungsform ist die maximale Längserstreckung größer als die maximale Quererstreckung. In einer bevorzugten Ausführungsform entspricht die maximale Längserstreckung dem 1,2-fachen, insbesondere bevorzugt dem 1,5-fachen und insbesondere bevorzugt mehr als dem 1,5-fachen und insbesondere bevorzugt dem 2-fachen, insbesondere bevorzugt mehr als dem 2-fachen der maximalen Quererstreckung.

In einer bevorzugten Ausführungsform entspricht die Form der Einhüllenden (der Enveloppe) der Kopfbegrenzungsfläche der Form der Einhüllenden (der Enveloppe) der Kopffläche.

In einer bevorzugten Ausführungsform sind die Richtung der maximalen Längserstreckung des Kopfes und die senkrecht zur Längsachse stehende Komponente der Bewegungsrichtung der Clipfläche parallel zueinander.

In einer bevorzugten Ausführungsform erstreckt sich die erste Seitenwand von der ersten Clipseite in Richtung auf die zweite Clipseite. In einer bevorzugten Ausführungsform ist eine zweite Seitenwand vorgesehen, die sich von der zweiten Clipseite in Richtung auf die erste Clipseite erstreckt. In einer bevorzugten Ausführungsform weist die erste Seitenwand eine flache Außenoberfläche auf, die einen Teil der Außenoberfläche des Schafts bildet. In einer bevorzugten Ausführungsform weist die zweite Seitenwand eine flache Außenoberfläche auf, die einen Teil der Außenoberfläche des Schafts bildet.

In einer bevorzugten Ausführungsform geht die Kopffläche über einen vierten Biegeabschnitt, der um eine vierte Biegeachse gebogen ist, in eine zweite Seitenwand über, wobei die vierte Biegeachse in einem Winkel von > 0° bis < 180° zur Längsachse und in einem Winkel von 0° bis < 90° zu der Komponente der Bewegungsrichtung der Clipfläche steht, die senkrecht zur Längsachse steht und insbesondere bevorzugt parallel zur ersten Biegeachse verläuft oder die erste Biegeachse ist. In dieser bevorzugten Ausführungsform geht die zweite Seitenwand über einen fünften Biegeabschnitt, der um eine fünfte Biegeachse gebogen ist, in die zweite Clipseite über, wobei die fünfte Biegeachse in einem Winkel von > 0° bis < 180° zu der Komponente der Bewegungsrichtung der Clipfläche steht, die senkrecht zur Längsachse steht, und/oder in einem Winkel von 0° bis < 90° zur Längsachse steht und insbesondere bevorzugt parallel zur zweiten Biegeachse verläuft. In einer bevorzugten Ausführungsform dieser bevorzugten Ausführungsform geht die zweite Clipseite über einen sechsten Biegeabschnitt, der um eine sechste Biegeachse gebogen ist, in eine der zweiten Seitenwand gegenüberliegende zweite Gegenwand über. In einer bevorzugten Ausführungsform verläuft die sechste Biegeachse parallel zur fünften Biegeachse. In einer bevorzugten Ausführungsform haben die zweite Seitenwand, die sich an die zweite Seitenwand anschließende zweite Clipseite und die sich an die zweite Clipseite anschließende, der zweiten Seitenwand gegenüberliegende zweite Gegenwand in einem Querschnitt senkrecht zur Längsachse zusammen einen U-förmigen Querschnitt, bei dem die zweite Clipseite den Grund des U's bildet.

In einer bevorzugten Ausführungsform, insbesondere bei einer Ausführungsform, die spiegelsymmetrisch bezüglich einer Ebene, ist, die die Längsachse enthält und parallel zu der ersten Clipseite und der zweiten Clipseite verläuft, sind die erste Seitenwand und die zweite Seitenwand der zweiten Clipseite fluchtend ausgerichtet. Unter fluchtend wird insbesondere bevorzugt verstanden, dass die erste Seitenwand eine nach außen weisende Oberfläche aufweist und die zweite Seitenwand eine nach außen weisende Oberfläche aufweist und dass die nach außen weisende Oberfläche der ersten Seitenwand und die nach außen weisende Oberfläche der zweiten Seitenwand im Wesentlichen in einer Ebene angeordnet sind. In einer bevorzugten Ausführungsform sind die erste Seitenwand und die zweite Seitenwand auf derselben Seite einer Ebene angeordnet, die die Längsachse des Clips enthält.

In einer alternativen Ausführungsform, insbesondere bei einer Ausführungsform, die in der Weise rotationssymmetrisch ausgeführt sein, dass es zumindest eine Ebene gibt, die die Längsachse des Clips enthält, bei der jeder Abschnitt des Clips, der sich auf einer Seite dieser Ebene befindet, durch eine Drehung um 180° um die Längsachse in Deckung mit einem identisch ausgebildeten Abschnitt des Clips auf der anderen Seite dieser Ebene gebracht werden kann, sind die zweite Gegenwand und die erste Seitenwand fluchtend ausgerichtet. Unter fluchtend wird insbesondere bevorzugt verstanden, dass die erste Seitenwand eine nach außen weisende Oberfläche aufweist und die zweite Gegenwand eine nach außen weisende Oberfläche aufweist und dass die nach außen weisende Oberfläche der ersten Seitenwand und die nach außen weisende Oberfläche der zweiten Gegenwand im Wesentlichen in einer Ebene angeordnet sind. In einer bevorzugten Ausführungsform sind die erste Seitenwand und die zweite Gegenwand auf derselben Seite einer Ebene angeordnet, die die Längsachse des Clips enthält.

In der Beschreibung wird als Inneres des Clips der unmittelbare Bereich um die Längsachse des Clips verstanden und/oder der von der ersten Clipseite, der zweiten Clipseite und der ersten Seitenwand und der zweiten Seitenwand und - soweit vorhanden - der von der ersten Gegenwand und der zweiten Gegenwand eingeschlossene Raum. Soweit in dieser Beschreibung von nach außen weisenden Oberflächen gesprochen wird oder in sonstiger Weise der Begriff "nach außen" verwendet wird, so ist damit eine Richtung gemeint, die von der Längsachse des Clips fortweist.

In einer weiteren Ausführungsform können mehrere Clipflächen über die ersten Clipseite überstehen, welche vorzugsweise zur Anlage mit dem ersten und/oder dem zweiten zu befestigenden Element vorgesehen sind. Weiterhin ist denkbar, dass sich jede dieser Clipflächen unabhängig von den anderen entlang der Bewegungsrichtung bewegen kann. In einer anderen Ausführungsform ist denkbar, dass diese Clipflächen eine teilweise mechanische Kopplung insbesondere über mehr oder weniger elastisch ausgestaltete Verbindungen aufweisen.

In einer weiteren Ausführungsform können mehrere Clipflächen über die zweite Clipseite überstehen, welche vorzugsweise zur Anlage mit dem ersten und/oder dem zweiten zu befestigenden Element vorgesehen sind. Weiterhin ist denkbar, dass sich jede dieser Clipflächen unabhängig von den anderen entlang der Bewegungsrichtung bewegen kann. In einer anderen Ausführungsform ist denkbar, dass diese Clipflächen eine teilweise mechanische Kopplung insbesondere über mehr oder weniger elastisch ausgestaltete Verbindungen aufweisen.

In einer bevorzugten Ausführungsform sind vier Clipflächen vorgesehen, zwei die von der ersten Clipseite vorstehen und zwei, die von der zweiten Clipseite vorstehen, und die jeweils von dem Kopf beabstandet sind und dem Kopf zugewandt sind, sowie insbesondere bevorzugt jeweils an einem federnden Element vorgesehen sind.

In einer bevorzugten Ausführungsform ist der zweite Biegeabschnitt, mit dem die erste Seitenwand in die erste Clipseite übergeht, durch eine Ausnehmung unterbrochen. In einer bevorzugten Ausführungsform erstreckt sich ein in Richtung nach außen federnd vorgespanntes Element des Clips, auf dem die Clipfläche ausgeführt ist, von innen durch die Ausnehmung hindurch nach außen. Unter einer Vorspannung nach außen wird dabei auch eine Ausführungsform verstanden, bei der das vorgespannte Element eine Ruheposition hat, in der es von einem Teilbereich des Schafts, beispielsweise einer Clipseite des Schafts, vorsteht und aus der es unter Krafteinwirkung hinausbewegt werden kann, insbesondere bevorzugt in eine Richtung senkrechts zur Schaftachse (Längsachse), bzw. ein einer Richtung die parallel zu einer Senkrechten auf die Schaftachse (Längsachse). Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht. In einer bevorzugten Ausführungsform ist auch der fünfte Biegeabschnitt, mit dem die zweite Seitenwand in die zweite Clipseite übergeht, durch eine Ausnehmung unterbrochen wird. In einer bevorzugten Ausführungsform erstreckt sich ein in Richtung nach außen federnd vorgespanntes Element des Clips, auf dem die Clipfläche ausgeführt ist, von innen durch die Ausnehmung hindurch nach außen.

In einer bevorzugten Ausführungsform weist die erste Seitenwand, die erste Clipfläche, die erste Gegenwand, die zweite Seitenwand, die zweite Clipfläche und/oder die zweite Gegenwand einen flachen Grundkörper auf. Als flacher Grundkörper wird insbesondere bevorzugt ein Grundkörper verstanden, der eine flache, insbesondere bevorzugt in einer Ebene angeordnete Außenoberfläche aufweist. Insbesondere bevorzugt weist der flache Grundkörper zusätzlich eine gleichmäßige Höhe (Dicke) auf. Es ist denkbar, dass ein hier als flach bezeichneter flacher Grundkörper Ausbeulungen, beispielsweise kleine Noppen oder Führungsrippen aufweist oder Einbuchtungen oder Dellen. Auch ein solcher mit bewusst gewählten, singulären Abweichungen von der rein geometrisch flachen Form versehener Grundkörper wird im Zuge der vorliegenden Beschreibung als flacher Grundkörper verstanden.

In einer bevorzugten Ausführungsform weist die erste Seitenwand einen flachen Grundkörper auf, wobei eine Schmalseite des Grundkörpers der ersten Seitenwand der zweiten Seitenwand zugewandt ist, wobei (insbesondere bei spiegelsymmetrischer Ausführung) die zweite Seitenwand, bzw. (insbesondere bei rotationssymmetrischer Ausführung) die zweite Gegenwand einen flachen Grundkörper aufweist, wobei eine Schmalseite des Grundkörpers der zweiten Seitenwand, bzw. zweiten Gegenwand der ersten Seitenwand zugewandt ist. In einer bevorzugten Ausführungsform erstreckt sich die Schmalseite des Grundkörpers rechtwinklig zu einer nach außen weisenden Oberfläche des Grundkörpers. In dieser bevorzugten Ausführungsform ist die Schmalseite der ersten Seitenwand und/oder die Schmalseite der zweiten Seitenwand, bzw. zweiten Gegenwand zumindest abschnittweise eben ausgebildet. In einer bevorzugten Ausführungsform erstreckt sich die Schmalseite der ersten Seitenwand in einer Ebene, die parallel zur Längsachse verläuft oder die Längsachse des Clips enthält und/oder die Schmalseite der zweiten Seitenwand, bzw. zweiten Gegenwand in einer Ebene, die parallel zur Längsachse verläuft oder die Längsachse des Clips enthält.

In einer bevorzugten Ausführungsform geht die erste Clipseite über einen Umbiegeabschnitt in einen Zwischenabschnitt über. Der Umbiegeabschnitt ist vorzugsweise als ein Bogen an einem Ende der ersten Clipseite vorgesehen, wobei der Scheitel des Bogens am Ende der ersten Clipseite einen Teil der Spitze des Clips ausbildet. In einer bevorzugten Ausführungsform geht die zweite Clipseite über einen Umbiegeabschnitt in einen Zwischenabschnitt über. Der Umbiegeabschnitt ist vorzugsweise als ein Bogen an einem Ende der zweiten Clipseite vorgesehen, wobei der Scheitel des Bogens am Ende der zweiten Clipseite einen Teil der Spitze des Clips ausbildet. Dabei kann der Bogen ausgehend von der Clipseite nach innen ausgeführt werden, wie dies beispielsweise bei dem Umbiegeabschnitt 15 der WO 2012/104205 A1 vorgesehen ist. Ebenso kann der Bogen nach außen gebogen sein.

In einer bevorzugten Ausführungsform weist ein die Clipsfläche aufweisendes, federndes Element eine Abschrägung auf. Die Abschrägung kann so ausgebildet sein, dass sich die Abschrägung in Richtung auf die Spitze verjüngt. Dies ermöglicht es, dass das federnde Element beim Einschieben des Clips mit der Spitze in ein Loch eines Elements mit dem das Loch begrenzenden Rand in Kontakt kommt und durch diesen Rand entgegen der Federvorspannung nach innen gedrückt wird.

In einer bevorzugten Ausführungsform weist der Kopf eine der Spitze des Clips zugewandte Gegenfläche auf, die der Clipfläche gegenüberliegt. Die Gegenfläche ist bevorzugt bei einer Draufsicht auf die Kopffläche des Clips auf der Unterseite des Kopfs angeordnet. In einer bevorzugten Ausführungsform kommt die Gegenfläche mit dem ersten und/oder dem zweiten zu befestigenden Element in Kontakt und stellt einen Anschlag in einer Bewegungsrichtung parallel zur Längsrichtung des Clips dar. In einer besonders bevorzugten Ausführungsform werden die Gegenflächen von der Unterseite und/oder Kante desjenigen Bereiches der Seitenwand gebildet, welche dem Kopf zugerechnet wird, d.h. der Abschnitt der Seitenwand, welcher eine größere Erstreckung senkrecht zur Längsachse des Clips aufweist, beispielsweise über den Schaft hinausragt und sich über einen ersten Biegeabschnitt an die Kopffläche anschließt. Dieser vorgenannte Bereich wird auch als Seitenfläche des Kopfes bezeichnet.

In einer weiteren Ausführungsform erstreckt sich die erste Seitenwand von der ersten Clipseite in Richtung auf die zweite Clipseite und (insbesondere bei spiegelsymmetrischer Ausführung) eine zweite Seitenwand, bzw. (insbesondere bei rotationssymmetrischer Ausführung) eine zweite Gegenwand erstreckt sich von der zweiten Clipseite in Richtung auf die erste Clipseite, wobei die erste Seitenwand und/oder die zweite Seitenwand, bzw. zweite Gegenwand nach außen weisende, in einer Grundebene liegende Grundflächen aufweisen, wobei die Grundebene in die Richtung senkrecht zur Grundebene die Ausdehnung des Schafts und in einer besonders bevorzugten Ausführungsform die Ausdehnung des Clips, ggf. mit Ausnahme vom am Kopf vorgesehenen federelastischen Armen in diese Richtung begrenzt (in diese Richtung liegen alle Elemente auf der selben Seite der Grundebene).

In einer anderen Ausführungsform erstreckt sich die Gegenwand von der ersten Clipseite in Richtung auf die zweite Clipseite und (insbesondere bei spiegelsymmetrischer Ausführung) eine zweite Gegenwand, bzw. (insbesondere bei rotationssymmetrischer Ausführung) eine zweite Seitenwand erstreckt sich von der zweiten Clipseite in Richtung auf die erste Clipseite, wobei die Gegenwand und/oder die zweite Gegenwand, bzw. zweite Seitenwand nach außen weisende, in einer Grundebene liegende Grundflächen aufweisen, wobei die Grundebene in die Richtung senkrecht zur Grundebene die Ausdehnung des Schafts und in einer besonders bevorzugten Ausführungsform die Ausdehnung des Clips, ggf. mit Ausnahme vom am Kopf vorgesehenen federelastischen Armen in diese Richtung begrenzt (in diese Richtung liegen alle Elemente auf der selben Seite der Grundebene).

In einer ebenfalls bevorzugten Ausführungsform bildet ein Teil des Umbiegeabschnitts einen Teil der Spitze. Besonders bevorzugt ist der Scheitel des Umbiegeabschnitts am weitesten von der Kopffläche beabstandet.

In einer besonders bevorzugten Ausführungsform erstreckt sich die erste Clipseite von dem Kopf bis zu der Spitze, wobei sich an dem spitzenseitigen Ende der ersten Clipseite Abschnitte des Clips anschließen, die zur Bildung der Spitze beitragen. In einer besonders bevorzugten Ausführungsform erstreckt sich die zweite Clipseite von dem Kopf bis zu der Spitze, wobei sich an dem spitzenseitigen Ende der zweiten Clipseite Abschnitte des Clips anschließen, die zur Bildung der Spitze beitragen. Es sind aber auch Bauformen denkbar, bei denen der Schaft des Clips zwar ausgehend vom Kopf mit einer ersten Clipseite und einer zweiten Clipseite beginnt, die sich jeweils in Richtung auf die Spitze erstrecken, dann aber zwischen der ersten Clipseite und den die Spitze bildenden Abschnitten des Clips andere, insbesondere im Verhältnis zu der Erstreckung der ersten Clipseite in andere Richtungen weisende Abschnitte des Clips vorgesehen sind, und/oder dann aber zwischen der zweiten Clipseite und den die Spitze bildenden Abschnitten des Clips andere, insbesondere im Verhältnis zu der Erstreckung der zweiten Clipseite in andere Richtungen weisende Abschnitte des Clips vorgesehen sind.

In einer weiteren bevorzugten Ausführungsform geht die erste Seitenwand über einen siebten Biegeabschnitt, der um eine siebte Biegeachse gebogen ist, in einen Stützabschnitt über, wobei die siebte Biegeachse in einem Winkel von > 0° bis < 180° zur Längsachse und/oder in einem Winkel von 0° bis < 90° zu der Komponente der Bewegungsrichtung der Clipfläche steht, die senkrecht zur Längsachse steht, und eine der Spitze zugewandte Gegenfläche an dem Stützabschnitt ausgebildet ist.

Insbesondere bevorzugt ist der Stützabschnitt parallel zur Clipfläche und/oder parallel zur Kopffläche und/oder senkrecht zur ersten Seitenwand ausgeführt.

In einer besonders bevorzugten Ausführungsform weist der Clip einen federnden Stützarm auf, der mit dem Kopf verbunden ist, wobei der Stützarm auf der der ersten Seitenwand gegenüberliegenden Seite des Kopfs angeordnet ist, aber über einen mit der ersten Seitenwand verbundenen Steg mit der ersten Seitenwand verbunden ist.

In einer bevorzugten Ausführungsform sind der Kopf und die erste Clipseite und die erste Seitenwand und die zweite Clipseite und die zweite Seitenwand alle Teil eines einstückigen Elements, die durch das Biegen von Abschnitten eines Metallabschnitts erzeugt wurden. Ebenso ist es denkbar, den erfindungsgemäßen Clip aus Kunststoff, beispielsweise durch Spritzguss herzustellen.
er erfindungsgemäße Clip wird insbesondere bevorzugt zum Befestigen eines Elements (dem zweiten Element) an einem Karosserieteil (dem erstes Element) eines Fahrzeugs, insbesondere bevorzugt an Rahmen eines Fahrzeugs verwendet. Insbesondere bevorzugt wird der Clip zum Befestigen eines Paneels (zweites Element) an dem Rahmen eines Fahrzeugs (erstes Element) verwendet. Besonders bevorzugt wird der Clip zum Befestigen eines Airbags an einem Karosserieteil, insbesondere bevorzugt eines Rahmens eines Fahrzeugs verwendet.

Die erfindungsgemäße Vorrichtung weist ein erstes Element und ein an dem ersten Element befestigtes zweites Element auf, wobei das erste Element ein Loch aufweist und das zweite Element mittels eines erfindungsgemäßen Clips an dem ersten Element befestigt ist, wobei der Clips das Loch derart durchgreift, dass der Kopf des Clips auf einer Seite des ersten Elements und die Spitze des Clips auf der gegenüberliegenden Seite des Elements angeordnet ist. In einer bevorzugten Ausführungsform durchgreift der Clips das Loch derart, dass der Kopf des Clips auf einer Seite des ersten Elements und eine Clipsfläche des Clips auf der gegenüberliegenden Seite des Elements angeordnet ist. In einer bevorzugten Ausführungsform ist das erste Element ein Karosserieteil eines Fahrzeugs, vorzugsweise ein Rahmen eines Fahrzeugs. In einer bevorzugten Ausführungsform ist das zweite Element ein Paneel oder ein Airbag.

Nachfolgend wird die Erfindung anhand einer lediglich ein Ausführungsbeispiel der Erfindung näher darstellenden Zeichnung erläutert. Darin zeigen
- Fig. 1: eine perspektivische Seitenansicht von schräg oben auf den erfindungsgemäßen Clip;
- Fig. 2: eine perspektivische Ansicht von schräg oben auf einen aufgebogenen erfindungsgemäßen Clip gemäß Fig. 1;
- Fig. 3: eine Draufsicht entlang der Längsachse A von oben auf den Clip gemäß den Figuren 1 und 2;
- Fig. 4: eine perspektivische Seitenansicht von schräg oben auf eine Abwandlung des Clips gemäß den Figuren 1 bis 3;
- Fig. 5: eine perspektivische Seitenansicht von schräg unten auf den Clip gemäß der Figur 4 und
- Fig. 6: eine geschnittene Seitenansicht auf den Clip gemäß der Fig. 4 sowie Bauteile, die durch den Clip aneinander befestigt werden.

Der in den Figuren dargestellte Clip zum Befestigen eines ersten Elements an einem zweiten Element weist einen Kopf 1 und eine Spitze 2 auf. Zwischen dem Kopf 1 und der Spitze 2 erstreckt sich ein aus mehreren Teilabschnitten zusammengesetzter Schaft.

Der Schaft weist eine erste Clipseite 3 und eine der ersten Clipseite 3 bezogen auf eine Längsachse A des Clips gegenüberliegend angeordnete und parallel zur ersten Clipseite 3 verlaufende zweite Clipseite 4 auf. Sowohl die erste Clipseite 3 als auch die zweite Clipseite 4 erstrecken sich von dem Bereich des Kopfes 1 in Richtung auf die Spitze 2. Die erste Clipseite 3 endet in einem bogenförmigen Umbiegeabschnitt 15, der ausgehend von der ersten Clipseite 3 nach innen gebogen ist. Der Scheitel des Bogens des Umbiegeabschnitts 15 bildet einen Teil der Spitze 2. Die zweite Clipseite 4 endet ebenfalls in einem bogenförmigen Umbiegeabschnitt, der nach innen gebogen ist. Der Scheitel des Bogens des Umbiegeabschnitts bildet einen Teil der Spitze 2 des Clips.

Die Kopf 1 weist eine maximale Längserstreckung X und eine maximale Quererstreckung Y auf, welche eine rechteckige Grundform bilden. Der Kopf 1 weist eine Seitenfläche 11 auf, an deren unteren Rand die der Spitze 2 zugewandten Gegenflächen 6 vorgesehen ist. Am unteren Rand der der Seitenfläche 11 gegenüberliegenden Seitenfläche 12 ist die der Spitze 2 zugewandte Gegenfläche 5 vorgesehen.

Der Clip weist Clipflächen 8 auf, die an der ersten Clipseite 3 überstehen. Ferner weist der Clip Clipflächen 9 auf, die an der zweiten Clipfläche 4 überstehen. Die Clipflächen 8,9 sind dem Kopf 1 zugewandt.

An die Kopffläche 7 schließt sich über einen ersten um eine erste Biegeachse B1 gebogenen Biegeabschnitt 13 eine erste Seitenwand 10 an, die sich vom Kopf 1 bis in die Nähe der Spitze 2 erstreckt und einen flachen Grundkörper aufweist. Die Seitenfläche 11 bildet einen Teil der Seitenwand 10, nämlich den zum Kopf 1 zugehörigen Teil der Seitenfläche 11. Die erste Biegeachse B1 verläuft senkrecht zur Längsachse A (dies wird ermittelt, in dem die Biegeachse B1 parallel verschoben wird, bis sie die Längsachse A schneidet; der Winkel im so gebildeten Schnittpunkt der Biegeachse B1 und der Längsachse A beträgt 90°). Im Bereich des Kopfes 1 ist die Längserstreckung der Seitenwand 10, nämlich der einen Teil der Seitenwand 10 bildenden Seitenfläche 11 ähnlich groß wie die Längserstreckung X der Kopffläche 7. Die erste Clipseite 3 schließt sich über einen zweiten um eine zweite Biegeachse B2 gebogenen Biegeabschnitt 14 an die erste Seitenwand 10 an. Die zweite Biegeachse B2 verläuft parallel zur Längsachse A.

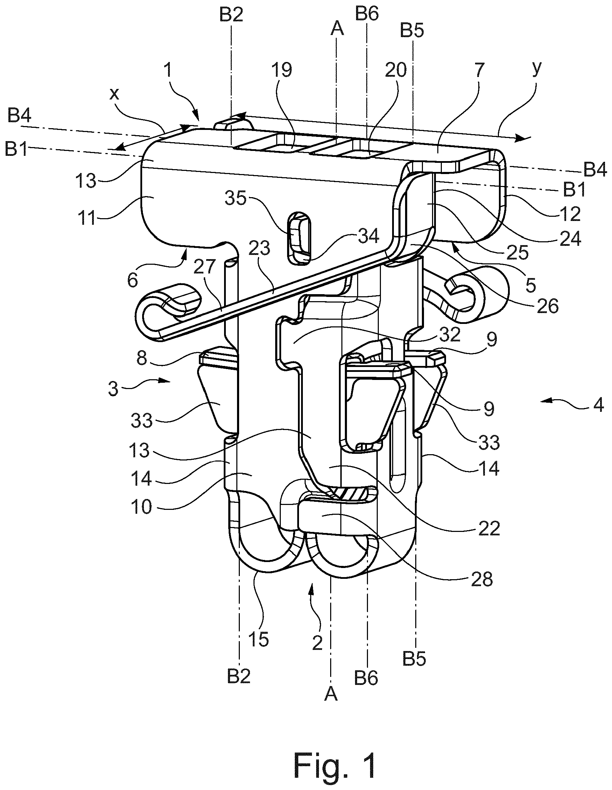

An die Kopffläche 7 schließt sich über einen vierten um eine vierte Biegeachse B4 gebogenen Biegeabschnitt eine (in Fig. 1 nach hinten weisende) zweite Seitenwand an, die sich vom Kopf 1 bis in die Nähe der Spitze 2 erstreckt und einen flachen Grundkörper aufweist. Die vierte Biegeachse B4 verläuft senkrecht zur Längsachse A (dies wird ermittelt, in dem die Biegeachse B4 parallel verschoben wird, bis sie die Längsachse A schneidet; der Winkel im so gebildeten Schnittpunkt der Biegeachse B4 und der Längsachse A beträgt 90°). Die erste Clipseite 3 schließt sich über einen fünften um eine fünfte Biegeachse B5 gebogenen Biegeabschnitt an die zweite Seitenwand an. Die fünfte Biegeachse B5 verläuft parallel zur Längsachse A.

Die erste Clipseite 3 geht über einen dritten Biegeabschnitt, der um eine dritte Biegeachse B3 gebogen ist, in eine der ersten Seitenwand 10 gegenüberliegende Gegenwand 17 über, wobei die dritte Biegeachse B3 parallel zur zweiten Biegeachse B2 verläuft. Die zweite Clipseite 4 geht über einen sechsten Biegeabschnitt, der um eine sechste Biegeachse B6 gebogen ist, in eine der zweiten Seitenwand gegenüberliegende zweite Gegenwand über, wobei die sechste Biegeachse B6 parallel zur fünften Biegeachse B5 verläuft.

Die erste Clipseite 3 geht über den Umbiegeabschnitt 15 in einen Zwischenabschnitt 18 über. Am Ende des Zwischenabschnitts 18 ist die Clipfläche 8 vorgesehen.

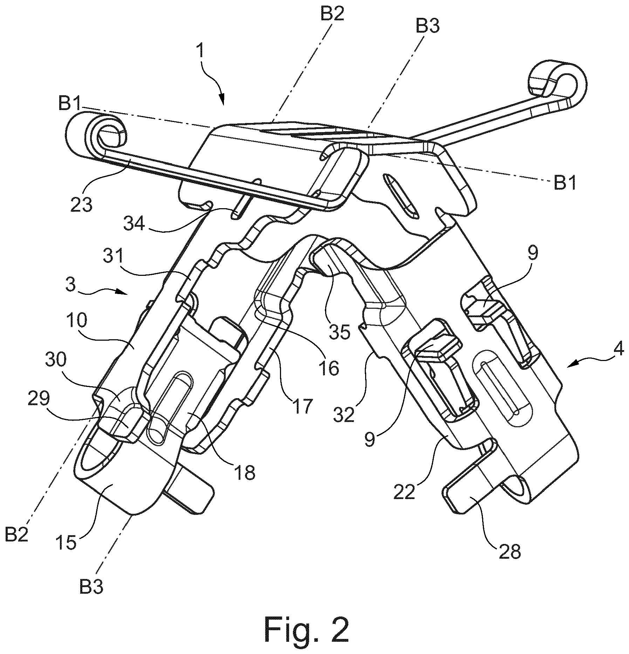

Insbesondere an der Darstellung der Figur 2 erkennt man, dass der Umbiegeabschnitt 15 als eine Art Feder wirkt. Die Clipfläche 8 kann aus der in der Figur 1 dargestellten ersten Position durch Aufwenden einer Kraft auf das äußere Ende der Clipfläche 8 in eine gegenüber der in Figur 1 dargestellten ersten Position näher zur Längsachse gelegene Position bewegt werden. Dabei wird die durch den Umbiegeabschnitt 15 gebildete Feder gespannt, nämlich der Umbiegeabschnitt 15 aufgebogen. Reduziert man die Kraft oder fällt die Kraft weg, so bewirkt der so gespannte Umbiegeabschnitt 15, dass sich die Clipfläche 8 aus der näher zur Längsachse gelegenen Position wieder zurück in die Figur 1 dargestellte erste Position zurückbewegt.

Bei der Bewegung aus der in Figur 1 dargestellten ersten Position in eine gegenüber der ersten Position näher zur Längsachse gelegenen Position bewegt sich die Clipfläche 8 in erster Näherung senkrecht zur Längsachse A. Tatsächlich führt die Clipfläche 8 jedoch eine Bewegung entlang eines Bogens um den Scheitel des Umbiegeabschnitts 15 durch. Somit hat die Clipfläche 8 bei ihrer Bewegung aus der ersten Position in die näher zur Längsachse A gelegenen Position eine gebogene Bewegungsrichtung. Diese hat aber in jedem Moment der Bewegung eine Komponente, die senkrecht zur Längsachse A steht. Die von der Spitze 2 fortweisende Kopffläche 7 ist eben ausgebildet. In ihrem Zentrum weist sie zwei Ausnehmungen 19, 20 auf. Diese Ausnehmungen 19, 20 eignen sich für das Einführen von Werkzeugen, die in Eingriff mit den Zwischenabschnitten 18 gebracht werden können, um diese nach innen, auf die Längsachse A zuzubewegen. Das ermöglicht es, die Clipfläche 8 und die Clipfläche 9 in eine näher zur Längsachse A gelegene Position zu bewegen und damit den Clip auszubauen.

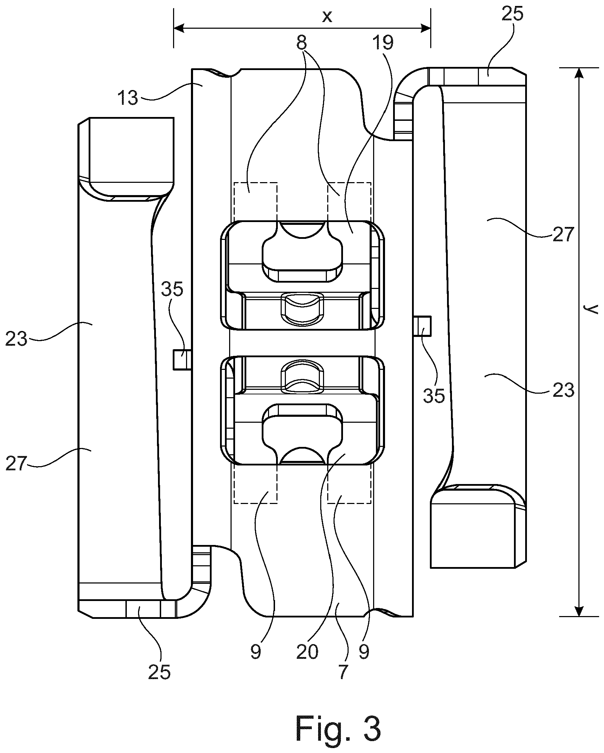

Die Figur 3 zeigt eine Draufsicht mit Blickrichtung entlang der Längsachse A auf den erfindungsgemäßen Clip. Hier erkennt man, dass der Kopf 1 in eine Richtung senkrecht zur Längsachse A eine maximale Längserstreckung X in eine Richtung senkrecht zur Längsachse A, die zugleich senkrecht zur Richtung der Längsachse X ist und eine maximale Quererstreckung Y aufweist, so dass alle Teile des Kopfs innerhalb einer rechteckigen Kopfbegrenzungsfläche 21 liegen, die senkrecht zur Längsachse steht. Die längere Seite der Kopfbegrenzungsfläche erstreckt sich in Richtung der maximalen Längserstreckung und hat deren Länge und die kürzere Seite der Kopfbegrenzungsfläche erstreckt sich in Richtung der maximalen Quererstreckung Y und hat deren Länge. In Figur 3 sind die Clipflächen 8 und 9 mit gestrichelten Linien dargestellt. Man erkennt, dass die Projektion der Clipflächen 8, 9 in Richtung der Längsachse A auf die Ebene der Kopfbegrenzungsfläche in der Kopfbegrenzungsfläche liegt. Die Clipflächen 8 und 9 stehen also nicht über den von dem Kopf eingenommenen Raum über.

Ferner erkennt man in der Figur 3, dass die Richtungen der Längserstreckungen X des Kopfes 1 und die senkrecht zur Längsachse A stehende Komponente der Bewegungsrichtung der Clipfläche 8 parallel zueinander sind.

Die Figur 1 und 2 zeigen, dass sich die erste Seitenwand 10 von der ersten Clipseite 3 in Richtung auf die zweite Clipseite 4 erstreckt. Ferner erstreckt sich die zweite Gegenwand 22 von der zweiten Clipseite 4 in Richtung auf die erste Clipseite 3. Die erste Seitenwand 10 und die Gegenwand 22 weisen jeweils flache Grundebenen auf. Wie man der Figur 3 besonders gut entnehmen kann, begrenzt die Ebene, in der die flachen Grundebenen der ersten Seitenwand 10 und der zweiten Gegenwand 22 liegen, die Ausdehnung des Clips quer zur Längsachse A. Alle Teile des Clips - mit Ausnahme der nachstehend näher beschriebenen federnden Stützarme - befinden sich auf einer Seite der die flachen Grundebenen der ersten Seite 10 und der zweiten Gegenwand 22 enthaltenen Ebene.

Der Clip weist einen federnden Stützarm 23 auf, der mit dem Kopf 1 verbunden ist und seitlich von diesem absteht. Dabei ist in dem Ausführungsbeispiel der Figuren 1 und 2 und 3 der Stützarm 23 auf der Seite der ersten Seitenwand 10 angeordnet. Die Seitenfläche 11 der Seitenwand 10 geht über einen Stützarm-Biegeabschnitt 24 in einen Steg 25 über. Der Steg 25 geht über einen Steg-Biegeabschnitt 26 in den federnden Teil 27 des Stützarms 23 über. Der federnde Teil 27 kann um den Steg-Biegeabschnitt 26 federnd nach oben gedrückt werden und übt dann einen nach unten wirkende Reaktionskraft auf das ihn mit nach oben biegende Element aus. Ein vergleichbarer Stützarm ist auf der gegenüberliegenden Seite des Kopfs 1 vorgesehen.

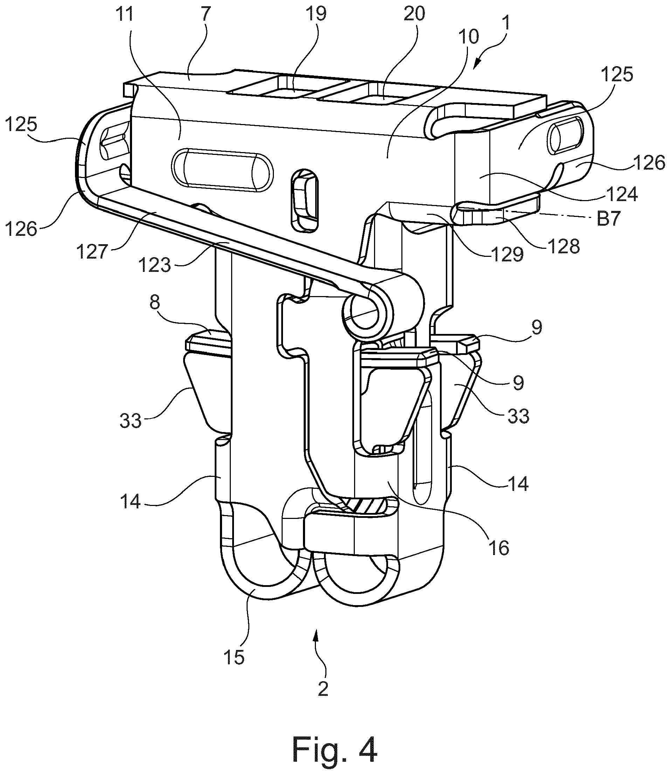

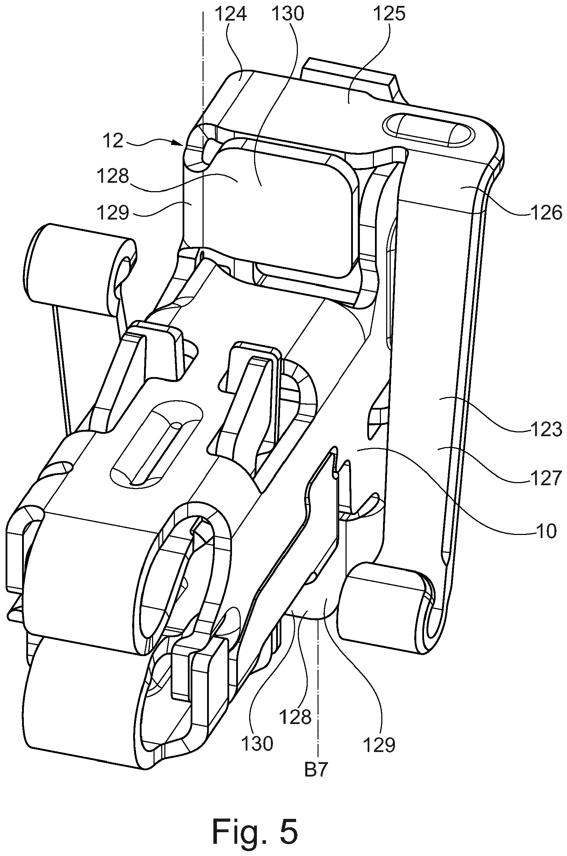

Die Figuren 4 und 5 zeigen eine Abwandlung des in Figuren 1 bis 3 gezeigten Clips. Die Abwandlung beschränkt sich auf die Ausführung der Stützarme und auf das Hinzutreten eines Stützabschnitts an der Unterseite des Kopfs 1. Aus diesem Grund werden für die unverändert gebliebenen Elemente des Clips die gleichen Bezugszeichen verwendet.

Bei der Ausführungsform der Figuren 4 und 5 befindet sich der federnde Stützarm 123 auf der der ersten Seitenwand 10 gegenüberliegenden Seite des Kopfs. Der federnde Stützarm 123 ist über einen mit der ersten Seitenwand 10 verbundenen Steg 125 mit der ersten Seitenwand 10 verbunden. Dabei geht die erste Seitenwand 10 über einen Stützarm-Biegeabschnitt 124 in Steg 125 über. Der Steg 125 geht über einen Steg-Biegeabschnitt 126 in den federnden Teil 127 des federnden Stützarms 123 über.

Ferner weist die modifizierte Ausführungsform der Figuren 4 und 5 einen Stützabschnitt 128 auf. Die erste Seitenwand 10 geht über einen siebten Biegeabschnitt 129, der um eine siebte Biegeachse B7 gebogen ist, in den Stützabschnitt 128 über. Die siebte Biegeachse B7 steht in einem Winkel von 90° zur Längsachse A und verläuft parallel zu der Komponente der Bewegungsrichtung, die senkrecht zur Längsachse A steht. An dem Stützabschnitt 128 ist eine der Spitze 2 zugewandte Gegenfläche 130 vorgesehen.

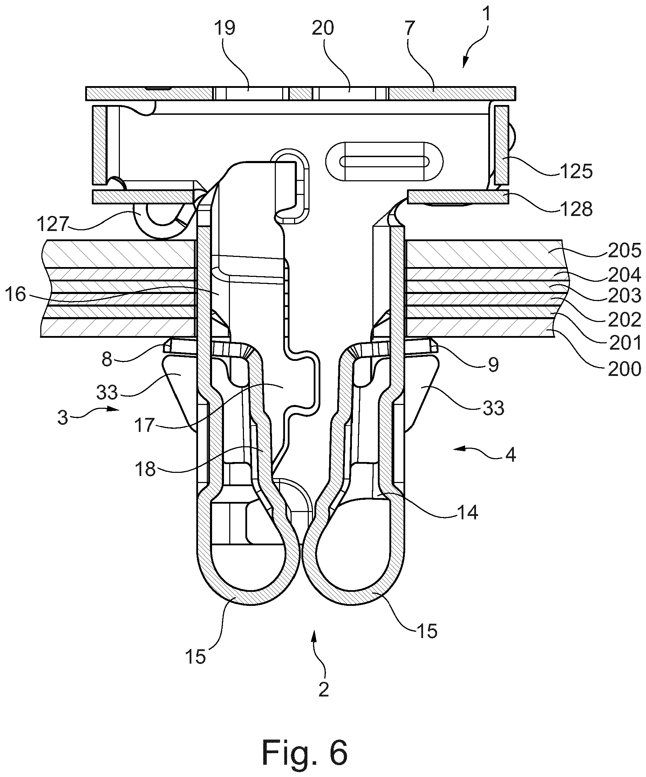

Fig. 6 zeigt, wie durch die Anlage der Clipflächen 8,9 einerseits (von unten) und dem federnden Teil 127 des Stützarms 123 andererseits (von oben) mehrere Bauteile 200 bis 205 aneinander befestigt werden können. Die Bauteile 200 bis 205 weisen jeweils ein Loch auf. Die Bauteile 200 bis 205 werden so übereinander gelegt, dass die Löcher in Deckung sind. Dann wird der Clip von oben durch die Löcher geführt (beginnend mit dem Loch des Bauteils 205). Dabei federt das die Clipflächen 8,9 tragende Teil aufgrund der Abschrägungen 33 zunächst zurück, so dass die Clipflächen 8,9 näher an der Längsachse A angeordnet sind. Haben die Clipfläche 8,9 auch das Bauteil 200 passiert, federn sie in die in Fig. 6 gezeigte Position zurück.

Der in den Fig. 1 dargestellte Clip ist bezüglich einer Rotationsachse, nämlich der Längsachse A, rotations-symmetrisch aufgebaut. Der erfindungsgemäße Clip in der in den Fig. dargestellten Ausführungsform ist ein einstückiges Element und wurde durch Biegen von Abschnitten eines Metallabschnitts erzeugt.

An der zweiten Clipfläche 4 ist ein erster, nach hinten gebogener Finger 28 vorgesehen, der über einen Bereich 29 der ersten Seitenwand 10 überlappt. Hierzu weist die erste Seitenwand 10 die in Fig. 2 besser ersichtliche Aufnahme in Form einer Eindellung 30 auf. Dabei ist der erste Finger 28 fluchtend mit dem flachen Grundkörper der zweiten Gegenwand 22 ausgeführt.

Wie in den Fig. 1 und 2 besonders gut ersichtlich, weist die Seitenwand 10 eine Ausnehmung 31 auf, in die ein Vorsprung 32 der zweiten Gegenwand 22 eingreift. Der Vorsprünge 32 ist derart ausgeführt, dass er nicht mit einem Bereich der gegenüberliegenden Seitenwand überlappt, sondern lediglich in die dort vorgesehene Ausnehmung 31 eingreift.

In dem in den Fig. 1 und 2 dargestellten Ausführungsbeispiel weisen die erste Clipseite 3 und die zweite Clipseite 4 jeweils einen flachen Grundkörper auf. In den Figuren ist zu erkennen, dass der ansonsten flache Grundkörper eine kleine Ausnehmung aufweist. Dies verdeutlicht dass im Rahmen dieser Beschreibung verwendete Verständnis des Begriffs "flacher Grundkörper", das nur in einer besonders bevorzugten Ausführungsform einen geometrisch exakt flachen Grundkörper vorsieht, aber in anderen Ausführungsformen - wie hier - auch solche Grundkörper als "flache Grundkörper" bezeichnet, die aufgrund kleiner Vorsprünge von einer geometrisch exakt flachen Form abweichen.

Bei dem in den Fig. gezeichneten Ausführungsbeispiel steht der flache Grundkörper der ersten Clipseite 3 in einem Winkel von 90 Grad zum flachen Grundkörper der ersten Seitenwand 10. Der flache Grundkörper der zweiten Clipseite 4 steht in einem Winkel von 90 Grad zum flachen Grundkörper der Gegenwand 22. Die erste Seitenwand 10 und die zweite Gegenwand 22 sind fluchtend zueinander ausgeführt (ihre nach außen weisenden Oberflächen befinden sich in einer Ebene).

Die jeweilige Clipsfläche 8,9 ist Teil eines flexiblen Elements, das jeweils durch eine entsprechende Ausnehmung oder Fenster die sich im jeweiligen Übergang zwischen der Clipseite 4, 5 und der ersten Seitenfläche 10, der zweiten Seitenfläche, der Gegenwand 17 und der zweiten Gegenwand 22 befindet, hindurch tritt. Das jeweilige elastische Element weist eine Abschrägung 48 auf, die bewirkt, dass das federnde Element, wenn der Clip in ein Loch eines Elements eingeführt wird, mit dem Rand des Lochs in Kontakt kommt und durch das weitere Einschieben des Clips entgegen der Federkraft nach innen gedrückt wird, aber nach Durchschreiten des Lochs in dem Element aufgrund der Federkraft wieder nach außen federt und dadurch das entsprechende Element hintergreift.

In der Seitenfläche 11 ist ein Loch 34 vorgesehen. Dieses Loch 34 wird von einem Stift 35 durchgriffen, der am oberen Ende der Gegenwand 22 vorgesehen ist und in einem Winkel von 90° zur Gegenwand 22 verläuft.

Die Fig. 1 bis 3 und 4 bis 5 zeigen zwei Bauformen des erfindungsgemäßen Clips mit federnden Stützarmen 23, 123. Das bedeutet jedoch nicht, dass die Erfindung nur auf Bauformen mit federndem Stützarm beschränkt ist. Bei anderen Bauformen werden die Stützarme 23, 123 weggelassen und der Kopf 1 kommt mit den Gegenflächen 5, 6 in Kontakt mit einem der Element.

## Patentansprüche

1. Clip zum Befestigen eines ersten Elements an einem zweiten Element, wobei der Clip
• einen Kopf (1) und eine Spitze (2) und
• eine erste Clipseite (3) und eine zweite Clipseite (4) aufweist, wobei sich die erste Clipseite (3) von einem dem Kopf (1) benachbarten Bereich entlang einer Längsachse (A) in Richtung auf die Spitze (2) erstreckt und sich die zweite Clipseite (4) von einem dem Kopf (1) benachbarten Bereich entlang der Längsachse (A) in Richtung auf die Spitze (2) erstreckt, und
• eine an der ersten Clipseite (3) überstehende Clipfläche (8) aufweist, wobei die Clipfläche (8) aus einer ersten Position unter Spannen einer Feder entlang einer Bewegungsrichtung in eine gegenüber der ersten Position näher zur Längsachse (A) gelegenen Position bewegt werden kann, wobei die Bewegungsrichtung zumindest eine Komponente hat, die senkrecht zur Längsachse (A) steht,
• der Kopf (1) einen Kopfabschnitt aufweist, an dem eine von der Spitze (2) fort weisende Kopffläche (7) ausgebildet ist, wobei die Kopffläche (7) über einen ersten Biegeabschnitt (13), der um eine erste Biegeachse (B1) gebogen ist, in eine erste Seitenwand (10) übergeht, wobei die erste Biegeachse (B1) in einem Winkel von > 0° bis < 180° zur Längsachse (A) und/oder in einem Winkel von 0° bis < 90° zu der Komponente der Bewegungsrichtung der Clipfläche (8) steht, die senkrecht zur Längsachse (A) steht,
**dadurch gekennzeichnet, dass**
die erste Seitenwand (10) über einen zweiten Biegeabschnitt (14), der um eine zweite Biegeachse (B2) gebogen ist, in die erste Clipseite (3) übergeht, wobei die zweite Biegeachse (B2) in einem Winkel von > 0° bis < 180° zu der Komponente der Bewegungsrichtung der Clipfläche (8) steht, die senkrecht zur Längsachse (A) steht, und/oder in einem Winkel von 0° bis < 90° zur Längsachse (A) steht.

2. Clip nach Anspruch 1, **dadurch gekennzeichnet, dass** der Kopf (1) eine der Spitze (2) zugewandte Gegenfläche (5, 6) aufweist, die der Clipfläche (8) gegenüberliegt.

3. Clip nach Anspruch 1 oder 2, **dadurch gekennzeichnet, dass** die erste Clipseite (3) über einen dritten Biegeabschnitt (16), der um eine dritte Biegeachse (B3) gebogen ist, in eine der ersten Seitenwand (10) gegenüberliegende Gegenwand (17) übergeht, wobei die dritte Biegeachse (B3) parallel zur zweiten Biegeachse (B2) verläuft.

4. Clip nach einem der Ansprüche 1 bis 3, **dadurch gekennzeichnet, dass** der Kopf (1) in eine Richtung senkrecht zur Längsachse (A) eine maximale Längserstreckung (X) und in eine Richtung senkrecht zur Längsachse (A), die zugleich senkrecht zur Richtung der Längserstreckung (X) ist, eine maximale Quererstreckung (Y) aufweist, so dass in einer Draufsicht auf den Kopf entlang der Längsachse (A) alle Teile des Kopfs innerhalb einer rechteckigen Kopfbegrenzungsfläche liegen, die senkrecht zur Längsachse (A) steht, deren längere Seite sich in Richtung der maximalen Längserstreckung (X) erstreckt und deren Länge hat und deren kürzere Seite sich in Richtung der maximalen Quererstreckung (Y) erstreckt und deren Länge aufweist, und die Projektion der Clipfläche (8) in Richtung der Längsachse (A) auf die Ebene der Kopfbegrenzungsfläche in der Kopfbegrenzungsfläche liegt.

5. Clip nach Anspruch 4, **dadurch gekennzeichnet, dass** die Richtung der Längserstreckung (X) des Kopfes (1) und die senkrecht zur Längsachse stehenden Komponente der Bewegungsrichtung der Clipfläche (8) parallel zueinander sind.

6. Clip nach einem der Ansprüche 1 bis 5, **dadurch gekennzeichnet, dass** sich die erste Seitenwand (10) von der ersten Clipseite (3) in Richtung auf die zweite Clipseite (4) erstreckt und sich eine zweite Gegenwand (22) von der zweiten Clipseite (4) in Richtung auf die erste Clipseite (3) erstreckt, und die erste Seitenwand (10) und/oder die zweite Gegenwand (22) eine flache Grundebene (12) aufweisen, welche die Ausdehnung des Clips quer zur Längsachse (A) begrenzt.

7. Clip nach einem der Ansprüche 1 bis 6, **dadurch gekennzeichnet, dass** die erste Clipseite (3) über einen Umbiegeabschnitt (15) in einen Zwischenabschnitt (18) übergeht und am Ende des Zwischenabschnitts (18) die Clipfläche (8) angeordnet ist.

8. Clip nach Anspruch 7, **dadurch gekennzeichnet, dass** ein Teil des Umbiegeabschnitts (15) einen Teil der Spitze (2) bildet.

9. Clip nach einem der Ansprüche 1 bis 8 **dadurch gekennzeichnet, dass** die erste Seitenwand über einen siebten Biegeabschnitt (129), der um eine siebte Biegeachse (B7) gebogen ist, in einen Stützabschnitt (128) übergeht, wobei die siebte Biegeachse (B7) in einem Winkel von > 0° bis < 180° zur Längsachse (A) und/oder in einem Winkel von 0° bis < 90° zu der Komponente der Bewegungsrichtung der Clipfläche (8) steht, die senkrecht zur Längsachse (A) steht, und eine der Spitze (2) zugewandte Gegenfläche (5, 6) an dem Stützabschnitt (129) ausgebildet ist.

10. Clip nach einem der Ansprüche 1 bis 9, **gekennzeichnet durch** einen federnden Stützarm (123), der mit dem Kopf (1) verbunden ist, wobei der Stützarm (123) auf der der ersten Seitenwand (10) gegenüberliegenden Seite des Kopfs (1) angeordnet ist, aber über einen mit der ersten Seitenwand (10) verbundenen Steg (125) mit der ersten Seitenwand (10) verbunden ist.

11. Clip nach einem der Ansprüche 1 bis 10, **dadurch gekennzeichnet, dass** der Kopf (1) und die erste Clipseite (3) und die erste Seitenwand (10) und die zweite Clipseite (4) und die zweite Seitenwand alle Teil eines einstückigen Elements sind, die durch das Biegen von Abschnitten eines Metallabschnitts erzeugt wurden.

12. Vorrichtung mit einem ersten Element und einem an dem ersten Element befestigten zweiten Element, wobei das erste Element eine Öffnung aufweist und das zweite Element mittels eines Clips nach einem der Ansprüche 1 bis 11 an dem ersten Element befestigt ist, wobei der Clip die Öffnung derart durchgreift, dass der Kopf (1) des Clips auf einer Seite des ersten Elements und die Spitze (2) des Clips auf der gegenüberliegenden Seite des ersten Elements angeordnet ist.

## Claims

1. Clip for fitting a first element to a second element, wherein the clip
• has a head (1) and a tip (2) and
• a first clip side (3) and a second clip side (4), wherein the first clip side (3) extends from an area neighbouring the head (1) along a longitudinal axis (A) in the direction of the tip (2) and the second clip side (4) extends from an area neighbouring the head (1) along the longitudinal axis (A) in the direction of the tip (2), and
• has a clip surface (8) protruding further than the first clip side (3), wherein the clip surface (8) can be moved from a first position whilst tensioning a spring along a movement direction into a position that lies opposite the first position nearer to the longitudinal axis (A), wherein the movement direction has at least one component that stands vertical to the longitudinal axis (A),
• the head (1) has a head section, on which a head surface (7) facing away from the tip (2) is formed, wherein the head surface (7) by way of a first bending section (13) that is bent around a first bending axis (B1), transforms into a first side wall (10), wherein the first bending axis (B1) stands at an angle of > 0° to < 180° to the longitudinal axis (A) and/or at an angle to 0° to < 90° to the component of the movement direction of the clip surface (8) that stands vertical to the longitudinal axis (A),
**characterised in that**
the first side wall (10) is bent across a second bending section (14), which is bent around a second bending axis (B2), and transforms into the first clip side (3), wherein the second bending axis (B2) stands at an angle of > 0° to < 180° to the component of the movement direction of the clip surface (8), which stands vertical to the longitudinal axis (A), and/or at an angle of 0° to < 90° to the longitudinal axis (A).

2. Clip according to claim 1, **characterised in that** the head (1) has a counter-surface (5, 6) facing the tip (2), which lies opposite the clip surface (8).

3. Clip according to claim 1 or 2, **characterised in that** the first clip side (3) is bent across a third bending section (16) that is bent around a third bending axis (B3), and transforms into a counter-wall (17) opposite the first side wall (10), wherein the third bending axis (B3) extends parallel to the second bending axis (B2).

4. Clip according to one of the claims 1 to 3, **characterised in that** the head (1) has a maximum longitudinal expansion (X) in a direction vertical to the longitudinal axis (A) and a maximum transverse expansion (Y) in a direction vertical to the longitudinal axis (A), which is simultaneously vertical to the direction of the longitudinal expansion (X), so that all parts of the head lie inside a rectangular head delimitation area in a top view onto the head along the longitudinal axis (A), which stands vertical to the longitudinal axis (A), the longer side of which extends in the direction of the maximum longitudinal expansion (X) and has its length, and the shorter side of which extends in the direction of the maximum transverse expansion (Y) and has its length, and the projection of the clip surface (8) in the direction of the longitudinal axis (A) onto the plane of the head delimitation area lies in said head delimitation area.

5. Clip according to claim 4, **characterised in that** the direction of the longitudinal expansion (X) of the head (1) and the component of the movement direction of the clip surface (8) standing vertical to the longitudinal axis are parallel to each other.

6. Clip according to one of the claims 1 to 5, **characterised in that** the first side wall (10) extends from the first clip side (3) in the direction of the second clip side (4) and a second counter-wall (22) extends from the second clip side (4) in the direction of the first clip side (3), and the first side wall (10) and/or the second counter-wall (22) have a flat base level (12), which delimits the expansion of the clip transverse to the longitudinal axis (A).

7. Clip according to one of the claims 1 to 6, **characterised in that** the first clip side (3) transforms into an interim section (18) via a bent-over section (15) and the clip surface (8) is arranged at the end of the interim section (18).

8. Clip according to claim 7, **characterised in that** a part of the bent-over section (15) forms part of the tip (2).

9. Clip according to one of the claims 1 to 8, **characterised in that** the first side wall transforms into a support section (128) via a seventh bending section (129), which is bent around a seventh bending axis (B7), wherein the seventh bending axis (B7) stands at an angle of > 0° to < 180° to the longitudinal axis (A) and/or at an angle of 0° to < 90° to the component of the movement direction of the clip surface (8) that stands vertical to the longitudinal axis (A), and that a counter-surface (5, 6) facing the tip (2) is formed on the support section (129).

10. Clip according to one of the claims 1 to 9, **characterised by** a sprung support arm (123) that is connected with the head (1), wherein the support arm (123) is arranged on the side of the head (1) opposite the first side wall (10), but is connected with the first side wall (10) via a bridge (125) connected with the first side wall (10).

11. Clip according to one of the claims 1 to 10, **characterised in that** the head (1) and the first clip side (3) and the first side wall (10) and the second clip side (4) and the second side wall are all part of a single-piece element that was produced through bending sections of a metal section.

12. Device with a first element and a second element fitted to the first element, wherein the first element has an opening and the second element is fitted to the first element by means of a clip according to one of the claims 1 to 11, wherein the clip penetrates the opening in such a way that the head (1) of the clip is arranged on one side of the first element and the tip (2) of the clip on the opposite side of the first element.

## Revendications

1. Clip pour fixer un premier élément à un deuxième élément, le clip présentant
• une tête (1) et une pointe (2) et
• une première face de clip (3) et une deuxième face de clip (4), la première face de clip (3) s'étendant le long d'un axe longitudinal (A) en direction de la pointe (2) à partir d'une zone adjacente de la tête (1) et la deuxième face de clip (4) s'étendant le long de l'axe longitudinal (A) en direction de la pointe (2) à partir d'une zone adjacente de la tête (1), et présentant
• une surface de clip (8) en saillie sur la première face de clip (3), la surface de clip (8) pouvant être déplacée depuis une première position sous tension d'un ressort le long d'un sens de mouvement dans une position opposée à la première position plus proche de l'axe longitudinal (A), le sens de mouvement ayant au moins un composant qui se trouve perpendiculaire par rapport à l'axe longitudinal (A),
• la tête (1) présentant une section de tête sur laquelle est formée une surface de tête (7) orientée à l'opposé de la pointe (2), la surface de tête (7) passant par une première section de flexion (13), qui est courbée autour d'un premier axe de flexion (B1), dans une première paroi latérale (10), le premier axe de flexion (B1) étant dans un angle de > 0° à < 180° par rapport à l'axe longitudinal (A) et/ou dans un angle de 0° à < 90° par rapport au composant du sens de mouvement de la surface de clip (8), qui est perpendiculaire à l'axe longitudinal (A), **caractérisé en ce que** la première paroi latérale (10) passe par une deuxième section de flexion (14), qui est courbée autour d'un deuxième axe de flexion (B2), dans la première face de clip (3), le deuxième axe de flexion (B2) étant dans un angle de > 0° à < 180° par rapport au composant du sens de mouvement de la surface de clip (8), qui est perpendiculaire à l'axe longitudinal (A) et/ou dans un angle de 0° à < 90° par rapport à l'axe longitudinal (A).

2. Clip selon la revendication 1, **caractérisé en ce que** la tête (1) présente une surface antagoniste (5, 6) orientée vers la pointe (2), surface antagoniste qui est placée en face de la surface de clip (8).

3. Clip selon la revendication 1 ou 2, **caractérisé en ce que** la première face de clip (3) passe par une troisième section de flexion (16), qui est courbée autour d'un troisième axe de flexion (B3), dans une paroi antagoniste (17) disposée en face de la première paroi latérale (10), le troisième axe de flexion (B3) étant parallèle au deuxième axe de flexion (B2).

4. Clip selon l'une quelconque des revendications 1 à 3, **caractérisé en ce que** la tête (1) présente un prolongement longitudinal (X) maximal dans une direction transversale par rapport à l'axe longitudinal (A) et un prolongement transversal (Y) maximal dans une direction transversale par rapport à l'axe longitudinal (A), qui est également transversal par rapport à la direction du prolongement longitudinal (X), de telle sorte que tous les éléments de la tête se situent à l'intérieur d'une surface de limitation de la tête rectangulaire, dans une vue de dessus sur la tête le long de l'axe longitudinal (A), surface de limitation de la tête qui est perpendiculaire à l'axe longitudinal (A), dont le plus long côté s'étend dans la direction du prolongement longitudinal (X) maximal et a sa longueur, et dont le plus court côté s'étend dans la direction du prolongement transversal (Y) maximal et présente sa longueur, et la projection de la surface de clip (8) se trouve dans la direction de l'axe longitudinal (A) au niveau de la surface de limitation de la tête dans la surface de limitation de la tête.

5. Clip selon la revendication 4, **caractérisé en ce que** la direction du prolongement longitudinal (X) de la tête (1) et le composant du sens de mouvement de la surface de clip (8) situé perpendiculairement à l'axe longitudinal sont parallèles l'un par rapport à l'autre.

6. Clip selon l'une quelconque des revendications 1 à 5, **caractérisé en ce que** la première paroi latérale (10) s'étend de la première face de clip (3) en direction de la deuxième face de clip (4) et une deuxième paroi antagoniste (22) s'étend de la deuxième face de clip (4) en direction de la première face de clip (3), et la première paroi latérale (10) et/ou la deuxième paroi antagoniste (22) présentent un plan de base (12) plat qui limite l'extension du clip perpendiculairement par rapport à l'axe longitudinal (A).

7. Clip selon l'une quelconque des revendications 1 à 6, **caractérisé en ce que** la première face de clip (3) passe par une section de courbure (15) dans une section intermédiaire (18) et la surface de clip (8) est disposée à l'extrémité de la section intermédiaire (18).

8. Clip selon la revendication 7, **caractérisé en ce qu'**une partie de la section de courbure (15) forme une partie de la pointe (2).

9. Clip selon l'une quelconque des revendications 1 à 8, **caractérisé en ce que** la première paroi latérale passe par une septième section de flexion (129), qui est courbée autour d'un septième axe de flexion (B7), dans une section d'appui (128), le septième axe de flexion (B7) étant dans un angle de > 0° à < 180° par rapport à l'axe longitudinal (A) et/ou dans un angle de 0° à < 90° par rapport au composant du sens de mouvement de la surface de clip (8), qui est perpendiculaire à l'axe longitudinal (A), et une surface antagoniste (5, 6) orientée vers la pointe (2) étant formée sur la section d'appui (129).

10. Clip selon l'une quelconque des revendications 1 à 9, caractérisé en un bras d'appui (123) flexible, joint à la tête (1), le bras d'appui (123) étant disposé sur le côté de la tête (1) opposé à la première paroi latérale (10), mais joint à la première paroi latérale (10) par une traverse (125) reliée à la première paroi latérale (10).

11. Clip selon l'une quelconque des revendications 1 à 10, **caractérisé en ce que** la tête (1) et la première face de clip (3) et la première paroi latérale (10) et la deuxième face de clip (4) et la deuxième paroi latérale sont toutes une partie d'un élément en une seule pièce qui sont générées par la flexion de sections d'une section métallique.

12. Dispositif avec un premier élément et un deuxième élément fixé sur le premier élément, le premier élément présentant une ouverture et le deuxième élément étant fixé au premier élément au moyen d'un clip selon l'une quelconque des revendications 1 à 11, le clip pénétrant dans l'ouverture de telle sorte que la tête (1) du clip est disposée sur un côté du premier élément et la pointe (2) du clip sur le côté opposé du premier élément.
